# EUROPEAN PATENT APPLICATION

(11) **EP 4 564 757 A1**
(43) Date of publication of application: **04.06.2025**
(21) Application number: 22952587.8
(22) Date of filing: 29.07.2022
(51) Int. Cl.: H04L 27/00, H04L 9/40, H04W 12/069

(54) **APPLICATION PROGRAM INTERFACE (API) AUTHENTICATION METHOD AND APPARATUS, AND COMMUNICATION DEVICE AND STORAGE MEDIUM**

(71) Applicant: Beijing Xiaomi Mobile Software Co., Ltd., Beijing 100085 (CN)
(72) Inventor: LIANG, Haoran, Beijing 100085 (CN); LU, Wei, Beijing 100085 (CN)
(74) Representative: Dehns Germany Partnerschaft mbB
(86) International application number: PCT/CN2022/109273
(87) International publication number: WO 2024/021142

(57) **Abstract**

The present disclosure relates to an application program interface (API) caller authentication method. The method comprises: sending authentication request information to a common API framework (CAPIF) function, the authentication request information being used for triggering the CAPIF function to perform identity authentication on an API caller (step 21).

## Description

### TECHNICAL FIELD

The present disclosure relates to an application program interface (API) authentication method and, in particular, to an application program interface (API) authentication method and apparatus, a communication device, and a storage medium.

### BACKGROUND

To address the security aspects of terminal-originated application program interface (API) invocation, and support the requirements of the subscriber-aware northbound API access (SNA), for example, it is proposed to provide secure access to APIs for terminals by authenticating and authorizing the terminals.

In SNA scenarios, it only involves the solution of authenticating the API invoker, and how to authenticate the API invoker is a problem that needs to be considered.

### SUMMARY

In view of this, embodiments of the present disclosure provide an application program interface (API) authentication method and apparatus, a communication device, and a storage medium.

According to a first aspect of the present disclosure, an application program interface (API) invoker authentication method is provided, including:
sending authentication request information to a common API framework (CAPIF) function,
where the authentication request information is for triggering the CAPIF function to authenticate an identity of an API invoker.

According to a second aspect of the present disclosure, an application program interface (API) invoker authentication method is provided, performed by a common API framework (CAPIF) function and including:
receiving authentication request information sent by a terminal,
where the authentication request information is for triggering the CAPIF function to authenticate an identity of an API invoker.

According to a third aspect of the present disclosure, an application program interface (API) invoker authentication method is provided, performed by a bootstrapping server function (BSF) and including:
receiving second request information sent by a CAPIF function;
where the second request information includes at least one of:
   a bootstrapping transaction identifier (B-TID) provided by an API invoker; or
   receiving a network application function identifier (NAF-ID) of the CAPIF function, including a fully qualified domain name (FQDN) of the CAPIF function and/or a Ua interface security protocol identifier between the CAPIF function and the terminal.

According to a fourth aspect of the present disclosure, an application program interface (API) invoker authentication method is provided, performed by a network side and including:
receiving authentication request information sent by a terminal,
where the authentication request information is for triggering a common API framework (CAPIF) function to authenticate an identity of an API invoker.

According to a fifth aspect of the present disclosure, an application program interface (API) invoker authentication apparatus is provided, including:
a sending module, configured to send authentication request information to a common API framework (CAPIF) function,
where the authentication request information is for triggering the CAPIF function to authenticate an identity of an API invoker.

According to a sixth aspect of the present disclosure, an application program interface (API) invoker authentication apparatus is provided, including:
a receiving module, configured to receive authentication request information sent by a terminal,
where the authentication request information is for triggering the CAPIF function to authenticate an identity of an API invoker.

According to a seventh aspect of the present disclosure, an application program interface (API) invoker authentication apparatus is provided, including:
a receiving module, configured to receive second request information sent by a common API framework (CAPIF) function,
where the second request information includes at least one of:
   a bootstrapping transaction identifier (B-TID) provided by an API invoker; or
   receiving a network application function identifier (NAF-ID) of the CAPIF function, including a fully qualified domain name (FQDN) of the CAPIF function and/or a Ua interface security protocol identifier between the CAPIF function and the terminal.

According to an eighth aspect of the present disclosure, an application program interface (API) invoker authentication apparatus is provided, including:
a receiving module, configured to receive authentication request information sent by a terminal,
where the authentication request information is for triggering a common API framework (CAPIF) function to authenticate an identity of an API invoker.

According to a ninth aspect of the present disclosure, a communication device is provided, including:
a processor; and
a memory, configured to store processor-executable instructions;
where the processor is configured to implement the method according to any embodiment of the present disclosure when the executable instructions are executed.

According to a tenth aspect of an embodiment of the present disclosure, a computer storage medium is provided, where the computer storage medium stores a computer executable program, and the executable program, when executed by a processor, realizes the method described in any embodiment of the present disclosure.

According to the technical solution of the embodiments of the present disclosure, authentication request information is sent to a common API framework (CAPIF) function, where the authentication request information is for triggering the CAPIF function to authenticate an identity of an API invoker. Since the API invoker sends the authentication request information to the CAPIF function, which triggers the CAPIF function to authenticate the API invoker, the CAPIF function is capable of authenticating the API invoker, which can improve the communication security in SNA scenarios compared with the modes that cannot authenticate the identity of the API invoker.

### BRIEF DESCRIPTION OF DRAWINGS

The accompanying drawings, which are incorporated in and constitute a part of the specification, illustrate embodiments consistent with the present disclosure, and are used together with the specification to explain the principles of the present disclosure.
FIG. 1 is a schematic structural diagram of a wireless communication system according to an exemplary embodiment.
FIG. 2 is a flowchart of an API invoker authentication method according to an exemplary embodiment.
FIG. 3 is a flowchart of an API invoker authentication method according to an exemplary embodiment.
FIG. 4 is a flowchart of an API invoker authentication method according to an exemplary embodiment.
FIG. 5 is a flowchart of an API invoker authentication method according to an exemplary embodiment.
FIG. 6 is a flowchart of an API invoker authentication method according to an exemplary embodiment.
FIG. 7 is a flowchart of an API invoker authentication method according to an exemplary embodiment.
FIG. 8 is a flowchart of an API invoker authentication method according to an exemplary embodiment.
FIG. 9 is a flowchart of an API invoker authentication method according to an exemplary embodiment.
FIG. 10 is a flowchart of an API invoker authentication method according to an exemplary embodiment.
FIG. 11 is a flowchart of an API invoker authentication method according to an exemplary embodiment.
FIG. 12 is a flowchart of an API invoker authentication method according to an exemplary embodiment.
FIG. 13 is a flowchart of an API invoker authentication method according to an exemplary embodiment.
FIG. 14 is a flowchart of an API invoker authentication method according to an exemplary embodiment.
FIG. 15 is a flowchart of an API invoker authentication method according to an exemplary embodiment.
FIG. 16 is a flowchart of an API invoker authentication method according to an exemplary embodiment.
FIG. 17 is a flowchart of an API invoker authentication method according to an exemplary embodiment.
FIG. 18 is a flowchart of an API invoker authentication method according to an exemplary embodiment.
FIG. 19 is a flowchart of an API invoker authentication method according to an exemplary embodiment.
FIG. 20 is a flowchart of an API invoker authentication method according to an exemplary embodiment.
FIG. 21 is a flowchart of an API invoker authentication method according to an exemplary embodiment.
FIG. 22 is a schematic diagram of an API invoker authentication apparatus according to an exemplary embodiment.
FIG. 23 is a schematic diagram of an API invoker authentication apparatus according to an exemplary embodiment.
FIG. 24 is a schematic diagram of an API invoker authentication apparatus according to an exemplary embodiment.
FIG. 25 is a schematic structural diagram of a terminal according to an exemplary embodiment.

### DETAILED DESCRIPTION

Reference will now be made in detail to exemplary embodiments, examples of which are illustrated in the accompanying drawings. When the following description refers to the accompanying drawings, unless otherwise indicated, the same numbers in different accompanying drawings indicate the same or similar elements. Implementations described in the following exemplary embodiments do not represent all implementations consistent with the embodiments of the present disclosure. Rather, they are merely examples of apparatuses and methods consistent with some aspects of embodiments of the present disclosure as detailed in the appended claims.

Terms used in embodiments of the present disclosure are only for a purpose of describing specific embodiments, and are not limiting the embodiments of the present disclosure. Singular forms of "a," said," and "the" used in the embodiments of the present disclosure and in the appended claims are also intended to include majority forms, unless the context clearly indicates otherwise. It should also be understood that the term "and/or" as used herein refers to any or all of the possible combinations containing one or more of the listed items in association.

It should be understood that although terms first, second, third, etc. may be used to describe various information in the embodiments of the present disclosure, these information should not be limited to these terms. These terms are used only to distinguish the same type of information from one another. For example, without departing from the scope of the present disclosure, first information can also be named as second information, and similarly, the second information can also be named as the first information. Depending on the context, the word "if" as used herein can be interpreted as "at" or "when" or "in response to determining".

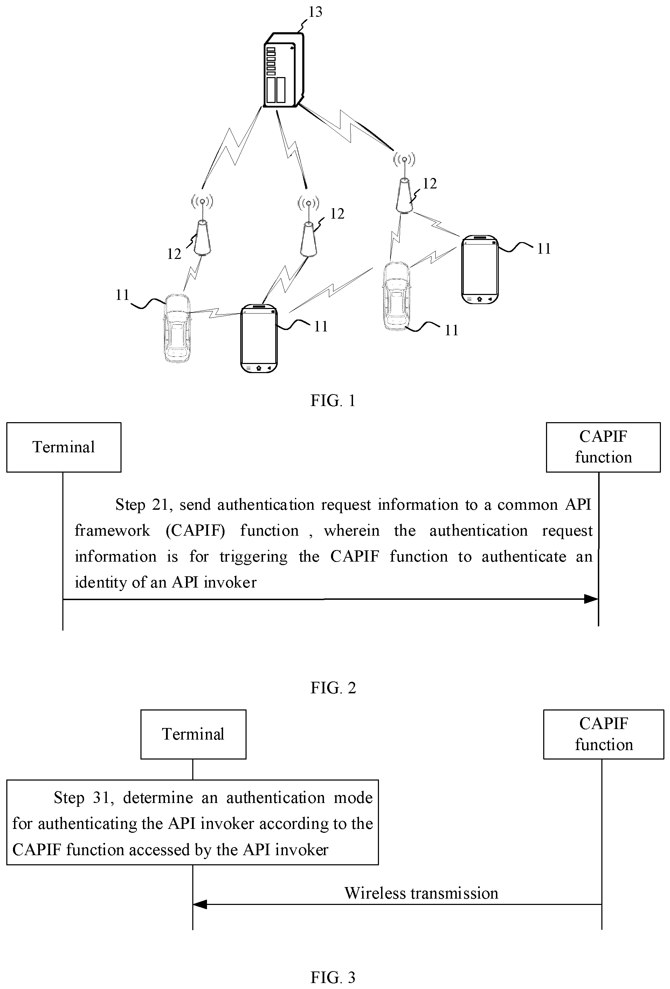

Please refer to FIG. 1, which shows a schematic structural diagram of a wireless communication system according to an embodiment of the present disclosure. As shown in FIG. 1, the wireless communication system is a communication system based on cellular mobile communication technology, which may include several terminals 11 and several base stations 12.

A terminal 11 may be a device that provides voice and/or data connectivity to users. The terminal 11 can communicate with one or more core networks via a radio access network (RAN). The terminal 11 can be an Internet of Things terminal, such as a sensor device, a mobile phone (or a "cellular" phone) and a computer with an Internet of Things terminal. For example, it can be a fixed, portable, pocket-sized, handheld, computer-built or vehicle-mounted device. For example, a station (STA), a subscriber unit, a subscriber station, a mobile station, a mobile, a remote station, an access point, a remote terminal, an access terminal, a user terminal, a user agent, a user device, or a user equipment (UE). Or, the terminal 11 can also be a device for an unmanned aerial vehicle. Or, the terminal 11 can also be a vehicle-mounted device, for example, a driving computer with wireless communication function or an external onboard computer wireless communication device. Or, the terminal 11 can also be a roadside device, such as a street lamp, a signal lamp or other roadside device with wireless communication function.

The base station 12 may be a network-side device in a wireless communication system. The wireless communication system can be the 4th generation mobile communication (4G) system, also known as long term evolution (LTE) system. Or, the wireless communication system can also be a 5G system, also known as a new radio (NR) system or a 5G NR system. Or, the wireless communication system may be any generation system. An access network in the 5G system can be named as a new generation-radio access network (NG-RAN). Or, an MTC system.

The base station 12 may be an evolved Node B (eNB) adopted in the 4G system. Or, the base station 12 can also be a next generation Node B (gNB) adopting a centralized and distributed architecture in the 5G system. When the base station 12 adopts a centralized and distributed architecture, it usually includes a central unit (CU) and at least two distributed units (DUs). The centralized unit is provided with a protocol stack of a packet data convergence protocol (PDCP) layer, a radio link Control Protocol (RLC) layer and a media access control (MAC) layer, a distributed unit is provided with a protocol stack of a physical (PHY) layer, and the embodiments of the present disclosure do not limit specific implementations of the base station 12.

A wireless connection can be established between the base station 12 and the terminal 11 through a wireless air interface. In different implementations, the wireless radio is a wireless radio based on the fourth generation mobile communication network technology (4G) standard; or the wireless radio is a wireless radio based on the fifth generation mobile communication network technology (5G) standard, for example, the wireless radio is a new radio; or, the wireless radio can also be a wireless radio based on a more next generation mobile communication network technology standard based on 5G.

In some embodiments, an end-to-end (E2E) connection can further be established between the terminals 11. For example, scenarios of vehicle to vehicle (V2V) communication, vehicle to infrastructure (V2I) communication and vehicle to pedestrian (V2P) communication in vehicle to everything (V2X) communication.

In some embodiments, the wireless communication system may further include a network management device 13.

The execution subjects involved in the embodiment of the present disclosure include, but are not limited to, a terminal (or a UE) in a cellular mobile communication system, a base station for cellular mobile communication, and the like.

As shown in FIG. 2, an API invoker authentication method is provided in this embodiment, which includes the following step 21.:
Step 21, sending authentication request information to a common API framework (CAPIF) function,
where the authentication request information is for triggering the CAPIF function to authenticate an identity of an API invoker.

In an embodiment, the API invoker includes a terminal. The embodiment of that present disclosure may be performed by a terminal.

The terminals covered by the present disclosure may be, but are not limited to, a cell phone, a wearable device, an in-vehicle terminal, a road side unit (RSU), a smart home terminal, an industrial sensing device, and/or a medical device, etc. In some embodiments, the terminal may be a Redcap terminal or a new radio (NR) terminal of a predetermined version (e.g., an NR terminal of R17).

However, it should be noted that this embodiment is not limited to being performed by the terminal, but can also be performed by a base station or other network communication nodes in a core network in certain scenarios, and is not limited here. For example, in scenarios where the base station is the receiver and/or sender in multimodal services, this embodiment can also be performed by the base station; in scenarios where the core network device is the receiver and/or sender in multimodal services, this embodiment can also be performed by the core network device. It should be noted that illustrating the terminal as the executing subject in the present disclosure does not limit the technical solution of the present disclosure.

In an embodiment, the CAPIF function accessed by the API invoker includes at least one of:
a first type of function, including: a CAPIF core function; or
a second type of function, including: functions in a CAPIF system other than the CAPIF core function.

For example, the second type of function may be an API exposing function (AEF) and/or an authorization function (AF), but is not limited to these functions. It should be noted that the functions in the present disclosure may be network functions in the core network.

In an embodiment, in response to authenticating the identity of the API invoker based on a certificate authentication mode, the authentication request information indicates a certificate used for certificate authentication; or in response to authenticating the identity of the API invoker based on a generic bootstrapping architecture (GBA) authentication mode, the authentication request information indicates a bootstrapping transaction identifier (B-TID).

In an embodiment, the authentication request information is sent to the CAPIF function, where the authentication request information is for triggering the CAPIF function to authenticate the identity of the API invoker. In response to authenticating the identity of the API invoker based on the GBA authentication mode, the authentication request information includes information for authenticating the API invoker based on the GBA authentication mode, such as the B-TID.

In an embodiment, the authentication request information is sent to the CAPIF function, where the authentication request information is for triggering the CAPIF function to authenticate the identity of the API invoker. In response to authenticating the identity of the API invoker based on the certificate authentication mode, the authentication request information includes a certificate for identity authentication. For example, the certificate may be generated by the first type of function.

In an embodiment, the authentication request information is sent to the CAPIF function, where the authentication request information is for triggering the CAPIF function to authenticate the identity of the API invoker. An authentication mode for authenticating the API invoker is determined according to the CAPIF function accessed by the API invoker.

In an embodiment, the authentication request information is sent to the CAPIF function, where the authentication request information is for triggering the CAPIF function to authenticate the identity of the API invoker. In response to the CAPIF function accessed by the terminal including the first type of function, the authentication mode for authenticating the API invoker is determined to be a generic bootstrapping architecture (GBA) authentication mode or a certificate authentication mode.

In an embodiment, the authentication request information is sent to the CAPIF function, where the authentication request information is for triggering the CAPIF function to authenticate the identity of the API invoker. In response to the CAPIF function accessed by the terminal not including the first type of function, the authentication mode for authenticating the API invoker is determined to be a certificate authentication mode.

In an embodiment, the authentication request information is sent to the CAPIF function, where the authentication request information is for triggering the CAPIF function to authenticate the identity of the API invoker. In response to the CAPIF function accessed by the terminal including the first type of function, the authentication mode for authenticating the API invoker is determined to be a generic bootstrapping architecture (GBA) authentication mode or a certificate authentication mode. In response to the CAPIF function accessed by the terminal being the first type of function, a certificate for certificate authentication sent by the first type of function is received, where the certificate is used for authentication between the terminal and the second type of function.

In an embodiment, the authentication request information is sent to the CAPIF function, where the authentication request information is for triggering the CAPIF function to authenticate the identity of the API invoker. In response to the CAPIF function accessed by the terminal including the first type of function, the authentication mode for authenticating the API invoker is determined to be a generic bootstrapping architecture (GBA) authentication mode or a certificate authentication mode. In response to the CAPIF function accessed by the terminal being the second type of function, terminal identity authentication is performed based on a GBA or certificate-based terminal identity authentication is performed based on a certificate sent by the first type of function.

In an embodiment, in response to performing the certificate-based terminal identity authentication based on the certificate sent by the first type of function, the authentication request information is sent to the CAPIF function, where the authentication request information includes the certificate sent by the first type of function. Identity authentication between the API invoker and the CAPIF function is performed based on the certificate.

In an embodiment, in response to performing the certificate-based terminal identity authentication based on the certificate sent by the first type of function, the authentication request information is sent to the CAPIF function, where the authentication request information is for triggering the CAPIF function to authenticate the identity of the API invoker. Identity authentication between the API invoker and the CAPIF function is performed based on a GBA authentication mode.

In an embodiment, the authentication request information includes at least one of:
an enrollment credential provided by an API provider domain, where the enrollment credential includes an access token;
an API invoker public key; or
a bootstrapping transaction identifier (B-TID).

In an embodiment, in response to performing the certificate-based terminal identity authentication based on the certificate sent by the first type of function, the authentication request information is sent to the CAPIF function, where the authentication request information includes the certificate sent by the first type of function. Identity authentication between the API invoker and the CAPIF function is performed based on a GBA authentication mode. First response information sent by the CAPIF function is received, where the first response information includes at least one of:
an API invoker certificate, where the API invoker certificate includes an API invoker identifier, an API invoker public key and/or an API invoker identity identifier assigned by the CAPIF function;
an API invoker identifier (ID) assigned by the CAPIF function;
API exposing function (AEF) authentication and authorization information; or
an API invoker signing key, e.g., an enrollment key (an Onboard_Secret).

The API invoker identity identifier includes at least one of:
a subscription permanent identifier (SUPI);
a generic public subscription identifier (GPSI);
an internet protocol (IP) multimedia subsystem (IMS) private identity (IMPI);
a subscription concealed identifier (SUCI); or
an application layer ID of UE.

In an embodiment, in response to an establishment of a transport layer security (TLS) session between the terminal and the CAPIF function, the authentication request information is sent to the CAPIF function via the TLS, where the authentication request information is for triggering the CAPIF function to authenticate the identity of the API invoker.

In an embodiment, enrollment information is obtained from an API provider domain or preconfigured information of the API invoker. The TLS is established based on the enrollment information, where the enrollment information includes at least one of: an address of the CAPIF function; a fully qualified domain name (FQDN) of the CAPIF function; a root certificate authority (CA) certificate of the CAPIF function; or the enrollment credential provided by the API provider domain, where the enrollment credential includes the access token. In response to an establishment of a transport layer security (TLS) session between the terminal and the CAPIF function, the authentication request information is sent to the CAPIF function via the TLS, where the authentication request information is for triggering the CAPIF function to authenticate the identity of the API invoker.

In an embodiment, communication between the terminal and a network function is initiated based on a reference point Ua interface. The authentication request information is sent to the CAPIF function, where the authentication request information is for triggering the CAPIF function to authenticate the identity of the API invoker.

In an embodiment, communication between the terminal and the network function is initiated based on the reference point Ua interface protected by a key Ks _NAF, where the key Ks _NAF is a shared key between the terminal and the network function. The authentication request information is sent to the CAPIF function, where the authentication request information is for triggering the CAPIF function to authenticate the identity of the API invoker.

In an embodiment, in response to a key Ks of a universal integrated circuit card (UICC) application selected by the terminal being available, the key Ks _NAF is determined based on the key Ks. Communication between the terminal and the network function is initiated based on the reference point Ua interface protected by a key Ks _NAF, where the key Ks _NAF is a shared key between the terminal and the network function. The authentication request information is sent to the CAPIF function, where the authentication request information is for triggering the CAPIF function to authenticate the identity of the API invoker.

In an embodiment, in response to a key Ks of the UICC application selected by the terminal being unavailable, the key Ks is determined based on a Ub reference point and a bootstrapping server function (BSF), and the key Ks _NAF is determined based on the key Ks. Communication between the terminal and the network function is initiated based on the reference point Ua interface protected by a key Ks _NAF, where the key Ks _NAF is a shared key between the terminal and the network function. The authentication request information is sent to the CAPIF function, where the authentication request information is for triggering the CAPIF function to authenticate the identity of the API invoker.

In an embodiment, in response to the terminal not desiring to determine the key Ks _NAF based on an existing key Ks of the UICC application, a newly generated key Ks is determined based on a Ub reference point and a BSF, and the key Ks _NAF is determined based on the newly generated key Ks. Communication between the terminal and the network function is initiated based on the reference point Ua interface protected by a key Ks _NAF, where the key Ks _NAF is a shared key between the terminal and the network function. The authentication request information is sent to the CAPIF function, where the authentication request information is for triggering the CAPIF function to authenticate the identity of the API invoker.

In an embodiment, communication between the terminal and the network function is initiated based on the reference point Ua interface protected by a key Ks _NAF, where the key Ks _NAF is a shared key between the terminal and the network function. The authentication request information is sent to the CAPIF function, where the authentication request information is for triggering the CAPIF function to authenticate the identity of the API invoker. First request information sent by the CAPIF function is received, where the first request information indicates that the key Ks _NAF has expired or is about to expire.

According to the technical solution of the embodiments of the present disclosure, authentication request information is sent to a common API framework (CAPIF) function, where the authentication request information is for triggering the CAPIF function to authenticate an identity of an API invoker. Since the API invoker sends the authentication request information to the CAPIF function, which triggers the CAPIF function to authenticate the API invoker, the CAPIF function is capable of authenticating the API invoker, which can improve the communication security in SNA scenarios compared with the modes that cannot authenticate the identity of the API invoker.

It should be noted that those skilled in the art can understand that the methods provided by the embodiments of the present disclosure can be executed alone or together with some methods in the embodiments of the present disclosure or some methods in related technologies.

As shown in FIG. 3, an API invoker authentication method is provided in this embodiment, which includes the following step 31.

Step 31, determining an authentication mode for authenticating the API invoker according to the CAPIF function accessed by the API invoker.

In an embodiment, the authentication request information is sent to the CAPIF function, where the authentication request information is for triggering the CAPIF function to authenticate the identity of the API invoker. In response to the CAPIF function accessed by the terminal including the first type of function, the authentication mode for authenticating the API invoker is determined to be a generic bootstrapping architecture (GBA) authentication mode.

In an embodiment, the authentication request information is sent to the CAPIF function, where the authentication request information is for triggering the CAPIF function to authenticate the identity of the API invoker. In response to the CAPIF function accessed by the terminal not including the first type of function, the authentication mode for authenticating the API invoker is determined to be a certificate authentication mode.

In an embodiment, the authentication request information is sent to the CAPIF function, where the authentication request information is for triggering the CAPIF function to authenticate the identity of the API invoker. In response to the CAPIF function accessed by the terminal not including the first type of function, the authentication mode for authenticating the API invoker is determined to be either the certificate authentication mode or the GBA authentication mode.

It should be noted that those skilled in the art can understand that the methods provided by the embodiments of the present disclosure can be executed alone or together with some methods in the embodiments of the present disclosure or some methods in related technologies.

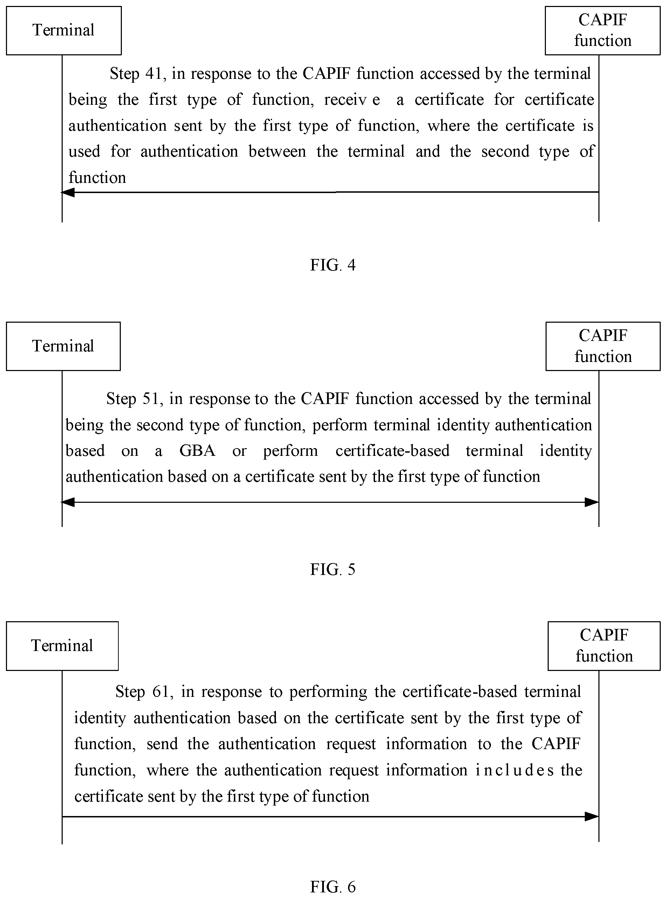

As shown in FIG. 4, an API invoker authentication method is provided in this embodiment, which includes the following step 41.

Step 41, in response to the CAPIF function accessed by the terminal being the first type of function, receiving a certificate for certificate authentication sent by the first type of function, where the certificate is used for authentication between the terminal and the second type of function.

In an embodiment, the authentication request information is sent to the CAPIF function, where the authentication request information is for triggering the CAPIF function to authenticate the identity of the API invoker. In response to the CAPIF function accessed by the terminal including the first type of function, the authentication mode for authenticating the API invoker is determined to be a generic bootstrapping architecture (GBA) authentication mode or a certificate authentication mode. In response to the CAPIF function accessed by the terminal being the first type of function, a certificate for certificate authentication sent by the first type of function is received, where the certificate is used for authentication between the terminal and the second type of function.

It should be noted that those skilled in the art can understand that the methods provided by the embodiments of the present disclosure can be executed alone or together with some methods in the embodiments of the present disclosure or some methods in related technologies.

As shown in FIG. 5, an API invoker authentication method is provided in this embodiment, which includes the following step 51.

Step 51, in response to the CAPIF function accessed by the terminal being the second type of function, performing terminal identity authentication based on a GBA or performing certificate-based terminal identity authentication based on a certificate sent by the first type of function.

In an embodiment, the authentication request information is sent to the CAPIF function, where the authentication request information is for triggering the CAPIF function to authenticate the identity of the API invoker. In response to the CAPIF function accessed by the terminal including the first type of function, the authentication mode for authenticating the API invoker is determined to be a generic bootstrapping architecture (GBA) authentication mode or a certificate authentication mode. In response to the CAPIF function accessed by the terminal being the second type of function, terminal identity authentication is performed based on a GBA or certificate-based terminal identity authentication is performed based on a certificate sent by the first type of function.

It should be noted that those skilled in the art can understand that the methods provided by the embodiments of the present disclosure can be executed alone or together with some methods in the embodiments of the present disclosure or some methods in related technologies.

As shown in FIG. 6, an API invoker authentication method is provided in this embodiment, which includes the following step 61.

Step 61, in response to performing the certificate-based terminal identity authentication based on the certificate sent by the first type of function, sending the authentication request information to the CAPIF function,
where the authentication request information includes the certificate sent by the first type of function.

In an embodiment, in response to performing the certificate-based terminal identity authentication based on the certificate sent by the first type of function, the authentication request information is sent to the CAPIF function, where the authentication request information includes the certificate sent by the first type of function. Identity authentication between the API invoker and the CAPIF function is performed based on the certificate.

It should be noted that those skilled in the art can understand that the methods provided by the embodiments of the present disclosure can be executed alone or together with some methods in the embodiments of the present disclosure or some methods in related technologies.

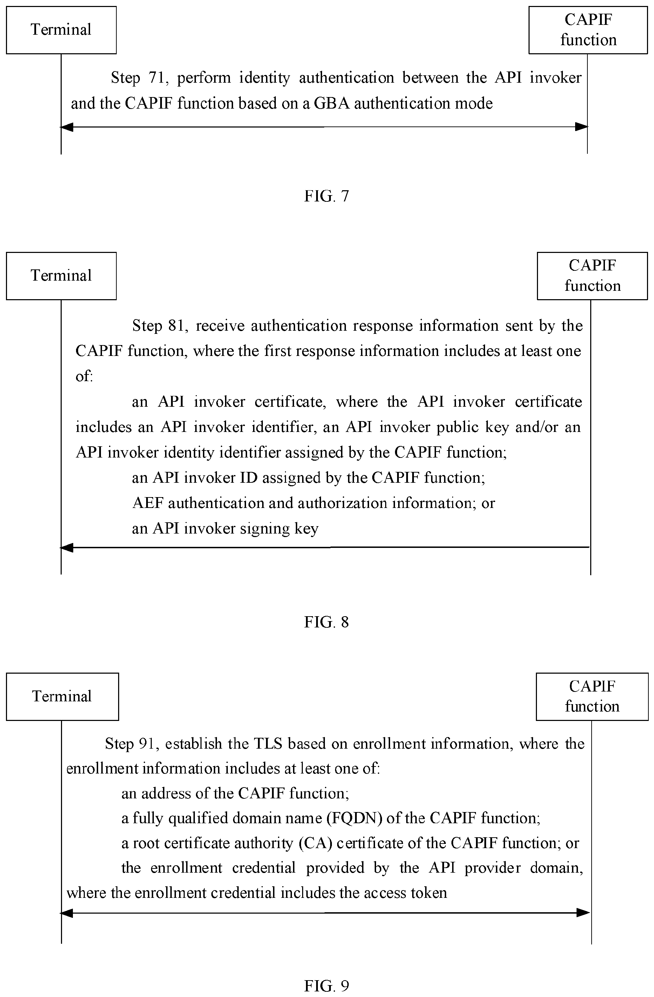

As shown in FIG. 7, an API invoker authentication method is provided in this embodiment, which includes the following step 71.

Step 71, performing identity authentication between the API invoker and the CAPIF function based on a GBA authentication mode.

In an embodiment, in response to performing the terminal identity authentication based on the GBA authentication mode, the authentication request information is sent to the CAPIF function, where the authentication request information is for triggering the CAPIF function to authenticate the identity of the API invoker. Identity authentication between the API invoker and the CAPIF function is performed based on a GBA authentication mode.

It should be noted that those skilled in the art can understand that the methods provided by the embodiments of the present disclosure can be executed alone or together with some methods in the embodiments of the present disclosure or some methods in related technologies.

As shown in FIG. 8, an API invoker authentication method is provided in this embodiment, which includes the following step 81.
Step 81, receiving authentication response information sent by the CAPIF function,
where the first response information includes at least one of:
   an API invoker certificate, where the API invoker certificate includes an API invoker identifier, an API invoker public key and/or an API invoker identity identifier assigned by the CAPIF function;
   an API invoker identifier (ID) assigned by the CAPIF function;
   API exposing function (AEF) authentication and authorization information; or
   an API invoker signing key.

The API invoker identity identifier includes at least one of:
a subscription permanent identifier (SUPI);
a generic public subscription identifier (GPSI);
an internet protocol (IP) multimedia subsystem (IMS) private identity (IMPI);
a subscription concealed identifier (SUCI); or
an application layer ID of UE.

In an embodiment, in response to performing the certificate-based terminal identity authentication based on the certificate sent by the first type of function, the authentication request information is sent to the CAPIF function, where the authentication request information includes the certificate sent by the first type of function. Identity authentication between the API invoker and the CAPIF function is performed based on a GBA authentication mode. First response information sent by the CAPIF function is received, where the first response information includes at least one of:
an API invoker certificate, where the API invoker certificate includes an API invoker identifier, an API invoker public key and/or an API invoker identity identifier assigned by the CAPIF function;
an API invoker identifier (ID) assigned by the CAPIF function;
API exposing function (AEF) authentication and authorization information; or
an API invoker signing key, e.g., an enrollment key (an Onboard_Secret).

It should be noted that those skilled in the art can understand that the methods provided by the embodiments of the present disclosure can be executed alone or together with some methods in the embodiments of the present disclosure or some methods in related technologies.

As shown in FIG. 9, an API invoker authentication method is provided in this embodiment, which includes the following step 91.

Step 91, establishing the TLS based on enrollment information,
where the enrollment information includes at least one of:
an address of the CAPIF function;
a fully qualified domain name (FQDN) of the CAPIF function;
a root certificate authority (CA) certificate of the CAPIF function; or
the enrollment credential provided by the API provider domain, where the enrollment credential includes the access token.

In an embodiment, in response to an establishment of a transport layer security (TLS) session between the terminal and the CAPIF function, the authentication request information is sent to the CAPIF function via the TLS, where the authentication request information is for triggering the CAPIF function to authenticate the identity of the API invoker.

In an embodiment, enrollment information is obtained from an API provider domain or preconfigured information of the API invoker. The TLS is established based on the enrollment information, where the enrollment information includes at least one of: an address of the CAPIF function; a fully qualified domain name (FQDN) of the CAPIF function; a root certificate authority (CA) certificate of the CAPIF function; or the enrollment credential provided by the API provider domain, where the enrollment credential includes the access token. In response to an establishment of a transport layer security (TLS) session between the terminal and the CAPIF function, the authentication request information is sent to the CAPIF function via the TLS, where the authentication request information is for triggering the CAPIF function to authenticate the identity of the API invoker.

It should be noted that those skilled in the art can understand that the methods provided by the embodiments of the present disclosure can be executed alone or together with some methods in the embodiments of the present disclosure or some methods in related technologies.

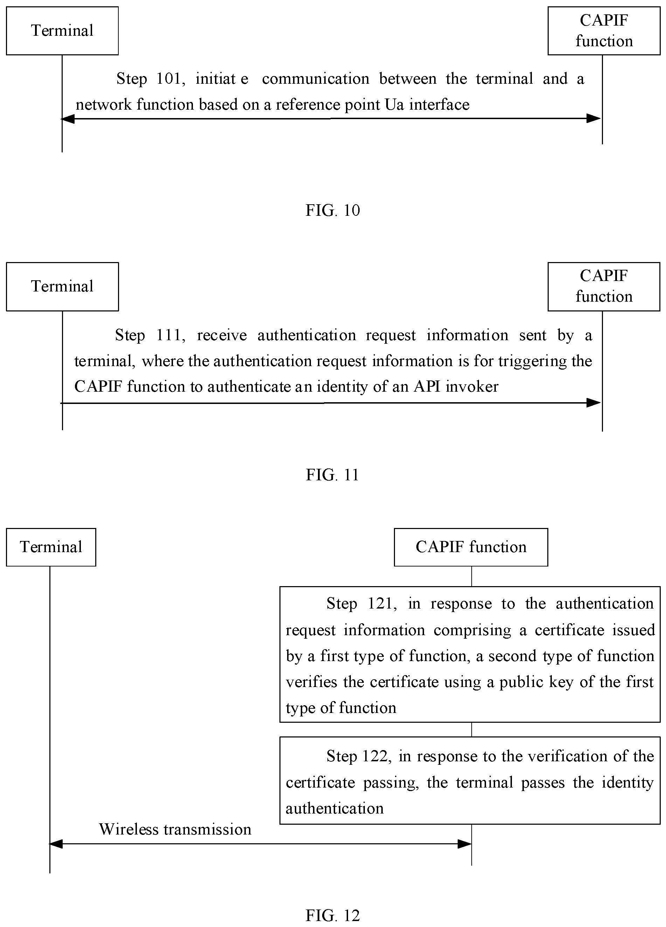

As shown in FIG. 10, an API invoker authentication method is provided in this embodiment, which includes the following step 101.

Step 101, initiating communication between the terminal and a network function based on a reference point Ua interface.

In an embodiment, communication between the terminal and a network function is initiated based on a reference point Ua interface. The authentication request information is sent to the CAPIF function, where the authentication request information is for triggering the CAPIF function to authenticate the identity of the API invoker.

In an embodiment, communication between the terminal and the network function is initiated based on the reference point Ua interface protected by a key Ks _NAF, where the key Ks _NAF is a shared key between the terminal and the network function. The authentication request information is sent to the CAPIF function, where the authentication request information is for triggering the CAPIF function to authenticate the identity of the API invoker.

In an embodiment, in response to a key Ks of a universal integrated circuit card (UICC) application selected by the terminal being available, the key Ks _NAF is determined based on the key Ks. Communication between the terminal and the network function is initiated based on the reference point Ua interface protected by a key Ks _NAF, where the key Ks _NAF is a shared key between the terminal and the network function. The authentication request information is sent to the CAPIF function, where the authentication request information is for triggering the CAPIF function to authenticate the identity of the API invoker.

In an embodiment, in response to a key Ks of the UICC application selected by the terminal being unavailable, the key Ks is determined based on a Ub reference point and a bootstrapping server function (BSF), and the key Ks _NAF is determined based on the key Ks. Communication between the terminal and the network function is initiated based on the reference point Ua interface protected by a key Ks _NAF, where the key Ks _NAF is a shared key between the terminal and the network function. The authentication request information is sent to the CAPIF function, where the authentication request information is for triggering the CAPIF function to authenticate the identity of the API invoker.

In an embodiment, in response to the terminal not desiring to determine the key Ks _NAF based on an existing key Ks of the UICC application, a newly generated key Ks is determined based on a Ub reference point and a BSF, and the key Ks _NAF is determined based on the newly generated key Ks. Communication between the terminal and the network function is initiated based on the reference point Ua interface protected by a key Ks _NAF, where the key Ks _NAF is a shared key between the terminal and the network function. The authentication request information is sent to the CAPIF function, where the authentication request information is for triggering the CAPIF function to authenticate the identity of the API invoker.

In an embodiment, communication between the terminal and the network function is initiated based on the reference point Ua interface protected by a key Ks _NAF, where the key Ks _NAF is a shared key between the terminal and the network function. The authentication request information is sent to the CAPIF function, where the authentication request information is for triggering the CAPIF function to authenticate the identity of the API invoker. First request information sent by the CAPIF function is received, where the first request information indicates that the key Ks _NAF has expired or is about to expire.

It should be noted that those skilled in the art can understand that the methods provided by the embodiments of the present disclosure can be executed alone or together with some methods in the embodiments of the present disclosure or some methods in related technologies.

As shown in FIG. 11, an API invoker authentication method is provided in this embodiment, where the method is performed by a CAPIF function and including the following step 111.

Step 111, receiving authentication request information sent by a terminal,
where the authentication request information is for triggering the CAPIF function to authenticate an identity of an API invoker.

In an embodiment, the API invoker includes a terminal.

The terminals covered by the present disclosure may be, but are not limited to, a cell phone, a wearable device, an in-vehicle terminal, a road side unit (RSU), a smart home terminal, an industrial sensing device, and/or a medical device, etc. In some embodiments, the terminal may be a Redcap terminal or a new radio (NR) terminal of a predetermined version (e.g., an NR terminal of R17).

However, it should be noted that this embodiment is not limited to being performed by the terminal, but can also be performed by a base station or other network communication nodes in a core network in certain scenarios, and is not limited here. For example, in scenarios where the base station is the receiver and/or sender in multimodal services, this embodiment can also be performed by the base station; in scenarios where the core network device is the receiver and/or sender in multimodal services, this embodiment can also be performed by the core network device. It should be noted that illustrating the terminal as the executing subject in the present disclosure does not limit the technical solution of the present disclosure.

In an embodiment, the CAPIF function accessed by the API invoker includes at least one of:
a first type of function, including: a CAPIF core function; or
a second type of function, including: functions in a CAPIF system other than the CAPIF core function.

For example, the second type of function may be an API exposing function (AEF) and/or an authorization function (AF), but is not limited to these functions. It should be noted that the functions in the present disclosure may be network functions in the core network.

In an embodiment, in response to authenticating the identity of the API invoker based on a certificate authentication mode, the authentication request information indicates a certificate used for certificate authentication; or in response to authenticating the identity of the API invoker based on a generic bootstrapping architecture (GBA) authentication mode, the authentication request information indicates a bootstrapping transaction identifier (B-TID).

In an embodiment, the authentication request information sent by the terminal is received, where the authentication request information is for triggering the CAPIF function to authenticate the identity of the API invoker. In response to authenticating the identity of the API invoker based on the GBA authentication mode, the authentication request information includes information for authenticating the API invoker based on the GBA authentication mode, such as the B-TID.

In an embodiment, the authentication request information sent by the terminal is received, where the authentication request information is for triggering the CAPIF function to authenticate the identity of the API invoker. In response to authenticating the identity of the API invoker based on the certificate authentication mode, the authentication request information includes a certificate for identity authentication. For example, the certificate may be generated by the first type of function.

In an embodiment, the authentication request information sent by the terminal is received, where the authentication request information is for triggering the CAPIF function to authenticate the identity of the API invoker. In response to authenticating the identity of the API invoker based on the certificate authentication mode, the authentication request information includes a certificate for identity authentication. For example, the certificate may be generated by the first type of function. In response to the authentication request information including a certificate issued by a first type of function, a second type of function verifies the certificate using a public key of the first type of function; and in response to the verification of the certificate passing, the terminal passes the identity authentication.

In an embodiment, in response to authenticating the identity of the API invoker based on a generic bootstrapping architecture (GBA) authentication mode, the first request information includes at least one of:
an enrollment credential provided by an API provider domain, where the enrollment credential includes an access token;
an API invoker public key; or
a bootstrapping transaction identifier (B-TID).

In an embodiment, the authentication request information sent by the terminal is received, where the authentication request information is for triggering the CAPIF function to authenticate the identity of the API invoker. Response information is sent to the terminal, where the response information includes at least one of:
an API invoker certificate, where the API invoker certificate includes an API invoker identifier, an API invoker public key and/or an API invoker identity identifier assigned by the CAPIF function;
an API invoker identifier (ID) assigned by the CAPIF function;
API exposing function (AEF) authentication and authorization information; or
an API invoker signing key.

The API invoker identity identifier includes at least one of:
a subscription permanent identifier (SUPI);
a generic public subscription identifier (GPSI);
an internet protocol (IP) multimedia subsystem (IMS) private identity (IMPI);
a subscription concealed identifier (SUCI); or
an application layer ID of UE.

In an embodiment, the TLS is established based on the enrollment information, where the enrollment information includes at least one of: an address of the CAPIF function; a fully qualified domain name (FQDN) of the CAPIF function; a root certificate authority (CA) certificate of the CAPIF function; or the enrollment credential provided by the API provider domain, where the enrollment credential includes the access token. In response to an establishment of a transport layer security (TLS) session between the terminal and a network function, the authentication request information sent by the terminal is received base on the TLS.

In an embodiment, communication between the terminal and a network function is performed based on a reference point Ua interface. The authentication request information sent by the terminal is received, where the authentication request information is for triggering the CAPIF function to authenticate the identity of the API invoker.

In an embodiment, communication between the terminal and a network function is performed based on a reference point Ua interface. Communication between the terminal and the network function is performed based on the reference point Ua interface protected by a key Ks _NAF, where the key Ks _NAF is a shared key between the terminal and the network function.

In an embodiment, communication between the terminal and a network function is performed based on a reference point Ua interface. Communication between the terminal and the network function is performed based on the reference point Ua interface protected by a key Ks _NAF, where the key Ks _NAF is a shared key between the terminal and the network function. In response to the key Ks _NAF has expired or is about to expire, first request information is sent to the terminal, where the first request information indicates that the key Ks _NAF has expired or is about to expire.

In an embodiment, the authentication request information sent by the terminal is received, where the authentication request information is for triggering the CAPIF function to authenticate the identity of the API invoker. Second request information is sent to a bootstrapping server function (BSF), where the second request information includes at least one of: a bootstrapping transaction identifier (B-TID) provided by the terminal; or a network application function identifier (NAF-ID) of the CAPIF function, including a fully qualified domain name (FQDN) of the CAPIF function and/or a Ua interface security protocol identifier between the CAPIF function and the terminal. Second response information sent by the BSF is received, where the second response information includes at least one of: a key Ks _NAF corresponding to the CAPIF function; user security settings (USS) information; a bootstrapping time; or a lifetime of a key.

In an embodiment, the authentication request information sent by the terminal is received, where the authentication request information is for triggering the CAPIF function to authenticate the identity of the API invoker. Second request information is sent to a bootstrapping server function (BSF), where the second request information includes at least one of: a bootstrapping transaction identifier (B-TID) provided by the terminal; or a network application function identifier (NAF-ID) of the CAPIF function, including a fully qualified domain name (FQDN) of the CAPIF function and/or a Ua interface security protocol identifier between the CAPIF function and the terminal. Second response information sent by the BSF is received, where the second response information includes at least one of: a key Ks _NAF corresponding to the CAPIF function; user security settings (USS) information; a bootstrapping time; or a lifetime of a key. The terminal is authenticated based on the key Ks _NAF.

In an embodiment, the authentication request information sent by the terminal is received, where the authentication request information is for triggering the CAPIF function to authenticate the identity of the API invoker. Second request information is sent to a bootstrapping server function (BSF), where the second request information includes at least one of: a bootstrapping transaction identifier (B-TID) provided by the terminal; or a network application function identifier (NAF-ID) of the CAPIF function, including a fully qualified domain name (FQDN) of the CAPIF function and/or a Ua interface security protocol identifier between the CAPIF function and the terminal. Second response information sent by the BSF is received, where the second response information includes at least one of: a key Ks _NAF corresponding to the CAPIF function; user security settings (USS) information; a bootstrapping time; or a lifetime of a key. In response to performing identity authentication of the terminal based on the GBA, identity information of the API invoker is verified based on Ks _NAF. In response to successful identity verification of the API invoker, an API invoker profile is generated, where the API invoker profile includes a selected mode for API exposing function (AEF) authentication and authorization information between the API invoker and the AEF.

In an embodiment, in response to successful identity verification of the API invoker, an API invoker profile is generated, where the API invoker profile includes a selected mode for API exposing function (AEF) authentication and authorization information between the API invoker and the AEF. An API invoker certificate is generated for assigned API invoker identifier and public key, where the API invoker certificate includes an API invoker identifier, an API invoker public key and/or an API invoker identity identifier assigned by the CAPIF function.

In an embodiment, in response to successful identity verification of the API invoker, an API invoker profile is generated, where the API invoker profile includes a selected mode for API exposing function (AEF) authentication and authorization information between the API invoker and the AEF. A signing key is generated,
where the signing key is bound to an AIP invoker identifier (ID) generated by the CAPIF function.

It should be noted that those skilled in the art can understand that the methods provided by the embodiments of the present disclosure can be executed alone or together with some methods in the embodiments of the present disclosure or some methods in related technologies.

As shown in FIG. 12, an API invoker authentication method is provided in this embodiment, where the method is performed by a CAPIF function and including the following steps 121 and 122.

Step 121, in response to the authentication request information including a certificate issued by a first type of function, a second type of function verifies the certificate using a public key of the first type of function.

Step 122, in response to the verification of the certificate passing, the terminal passes the identity authentication.

In an embodiment, the authentication request information sent by the terminal is received, where the authentication request information is for triggering the CAPIF function to authenticate the identity of the API invoker. In response to authenticating the identity of the API invoker based on the certificate authentication mode, the authentication request information includes a certificate for identity authentication. For example, the certificate may be generated by the first type of function. In response to the authentication request information including a certificate issued by a first type of function, a second type of function verifies the certificate using a public key of the first type of function; and in response to the verification of the certificate passing, the terminal passes the identity authentication.

It should be noted that those skilled in the art can understand that the methods provided by the embodiments of the present disclosure can be executed alone or together with some methods in the embodiments of the present disclosure or some methods in related technologies.

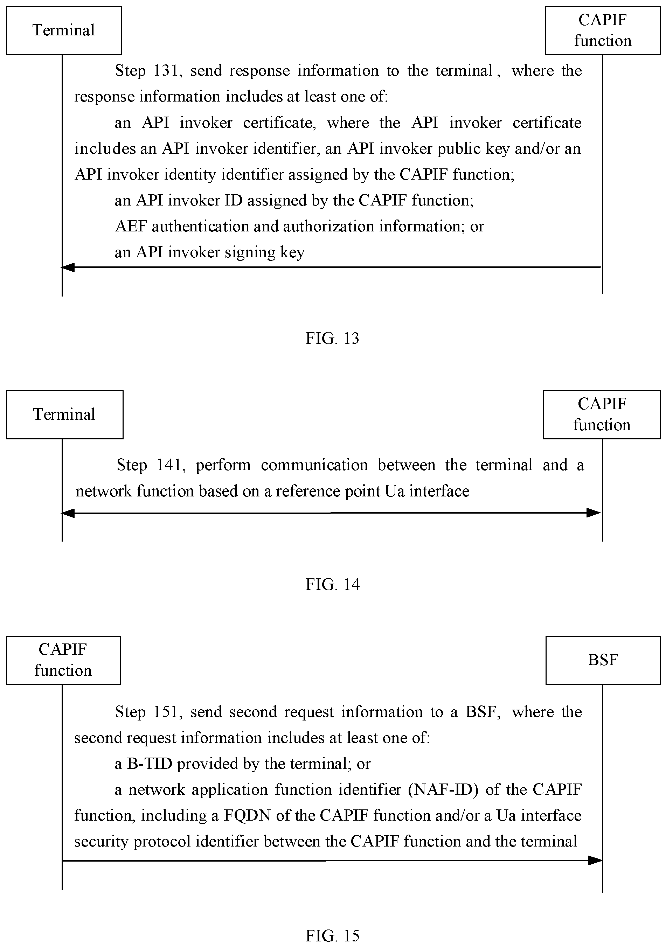

As shown in FIG. 13, an API invoker authentication method is provided in this embodiment, where the method is performed by a CAPIF function and including the following step 131.
Step 131, sending response information to the terminal,
where the response information includes at least one of:
   an API invoker certificate, where the API invoker certificate includes an API invoker identifier, an API invoker public key and/or an API invoker identity identifier assigned by the CAPIF function;
   an API invoker identifier (ID) assigned by the CAPIF function;
   API exposing function (AEF) authentication and authorization information; or
   an API invoker signing key.

The API invoker identity identifier includes at least one of:
a subscription permanent identifier (SUPI);
a generic public subscription identifier (GPSI);
an internet protocol (IP) multimedia subsystem (IMS) private identity (IMPI);
a subscription concealed identifier (SUCI); or
an application layer ID of UE.

In an embodiment, the authentication request information sent by the terminal is received, where the authentication request information is for triggering the CAPIF function to authenticate the identity of the API invoker. Response information is sent to the terminal, where the response information includes at least one of:
an API invoker certificate, where the API invoker certificate includes an API invoker identifier, an API invoker public key and/or an API invoker identity identifier assigned by the CAPIF function;
an API invoker identifier (ID) assigned by the CAPIF function;
API exposing function (AEF) authentication and authorization information; or
an API invoker signing key.

In an embodiment, the TLS is established based on the enrollment information, where the enrollment information includes at least one of: an address of the CAPIF function; a fully qualified domain name (FQDN) of the CAPIF function; a root certificate authority (CA) certificate of the CAPIF function; or the enrollment credential provided by the API provider domain, where the enrollment credential includes the access token. In response to an establishment of a transport layer security (TLS) session between the terminal and a network function, the authentication request information sent by the terminal is received based on the TLS, where the authentication request information is for triggering the CAPIF function to authenticate the identity of the API invoker. Response information is sent to the terminal, where the response information includes at least one of: an API invoker certificate, where the API invoker certificate includes an API invoker identifier, an API invoker public key and/or an API invoker identity identifier (including but not limited to SUPI, GPSI, IMPI, SUCI, etc.) assigned by the CAPIF function; an API invoker identifier (ID) assigned by the CAPIF function; API exposing function (AEF) authentication and authorization information; or an API invoker signing key.

It should be noted that those skilled in the art can understand that the methods provided by the embodiments of the present disclosure can be executed alone or together with some methods in the embodiments of the present disclosure or some methods in related technologies.

As shown in FIG. 14, an API invoker authentication method is provided in this embodiment, where the method is performed by a CAPIF function and including the following step 141.

Step 141, performing communication between the terminal and a network function based on a reference point Ua interface.

In an embodiment, communication between the terminal and a network function is performed based on a reference point Ua interface. The authentication request information sent by the terminal is received, where the authentication request information is for triggering the CAPIF function to authenticate the identity of the API invoker.

In an embodiment, communication between the terminal and the network function is performed based on the reference point Ua interface protected by a key Ks _NAF, where the key Ks _NAF is a shared key between the terminal and the network function. The authentication request information sent by the terminal is received, where the authentication request information is for triggering the CAPIF function to authenticate the identity of the API invoker.

In an embodiment, communication between the terminal and the network function is performed based on the reference point Ua interface protected by a key Ks _NAF, where the key Ks _NAF is a shared key between the terminal and the network function. The authentication request information sent by the terminal is received, where the authentication request information is for triggering the CAPIF function to authenticate the identity of the API invoker. In response to the key Ks _NAF has expired or is about to expire, first request information is sent to the terminal, where the first request information indicates that the key Ks _NAF has expired or is about to expire.

It should be noted that those skilled in the art can understand that the methods provided by the embodiments of the present disclosure can be executed alone or together with some methods in the embodiments of the present disclosure or some methods in related technologies.

As shown in FIG. 15, an API invoker authentication method is provided in this embodiment, where the method is performed by a CAPIF function and including the following step 151
Step 151, sending second request information to a bootstrapping server function (BSF),
where the second request information includes at least one of:
   a bootstrapping transaction identifier (B-TID) provided by the terminal; or
   a network application function identifier (NAF-ID) of the CAPIF function, including a fully qualified domain name (FQDN) of the CAPIF function and/or a Ua interface security protocol identifier between the CAPIF function and the terminal.

In an embodiment, the authentication request information sent by the terminal is received, where the authentication request information is for triggering the CAPIF function to authenticate the identity of the API invoker. Second request information is sent to a bootstrapping server function (BSF), where the second request information includes at least one of: a bootstrapping transaction identifier (B-TID) provided by the terminal; or a network application function identifier (NAF-ID) of the CAPIF function, including a fully qualified domain name (FQDN) of the CAPIF function and/or a Ua interface security protocol identifier between the CAPIF function and the terminal. Second response information sent by the BSF is received, where the second response information includes at least one of: a key Ks _NAF corresponding to the CAPIF function; user security settings (USS) information; a bootstrapping time; or a lifetime of a key.

It should be noted that those skilled in the art can understand that the methods provided by the embodiments of the present disclosure can be executed alone or together with some methods in the embodiments of the present disclosure or some methods in related technologies.

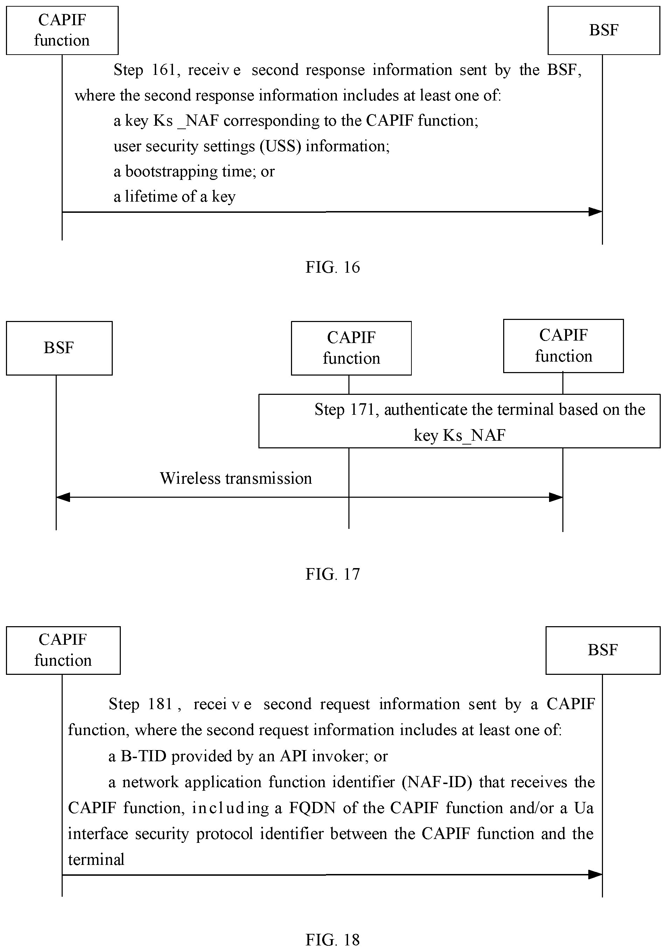

As shown in FIG. 16, an API invoker authentication method is provided in this embodiment, where the method is performed by a CAPIF function and including the following step 161.
Step 161, receiving second response information sent by the BSF,
where the second response information includes at least one of:
   a key Ks _NAF corresponding to the CAPIF function;
   user security settings (USS) information;
   a bootstrapping time; or
   a lifetime of a key.

In an embodiment, the authentication request information sent by the terminal is received, where the authentication request information is for triggering the CAPIF function to authenticate the identity of the API invoker. Second request information is sent to a bootstrapping server function (BSF), where the second request information includes at least one of: a bootstrapping transaction identifier (B-TID) provided by the terminal; or a network application function identifier (NAF-ID) of the CAPIF function, including a fully qualified domain name (FQDN) of the CAPIF function and/or a Ua interface security protocol identifier between the CAPIF function and the terminal. Second response information sent by the BSF is received, where the second response information includes at least one of: a key Ks _NAF corresponding to the CAPIF function; user security settings (USS) information; a bootstrapping time; or a lifetime of a key.

It should be noted that those skilled in the art can understand that the methods provided by the embodiments of the present disclosure can be executed alone or together with some methods in the embodiments of the present disclosure or some methods in related technologies.

As shown in FIG. 17, an API invoker authentication method is provided in this embodiment, where the method is performed by a CAPIF function and including the following step 171.

Step 171, authenticating the terminal based on the key Ks _NAF.

In an embodiment, the terminal signs a message with its own Ks_NAF, and the CAPIF function verifies the signature using the Ks_NAF obtained from the BSF. If the verification is successful, the identity authentication is successful.

In an embodiment, the authentication request information sent by the terminal is received, where the authentication request information is for triggering the CAPIF function to authenticate the identity of the API invoker. Second request information is sent to a bootstrapping server function (BSF), where the second request information includes at least one of: a bootstrapping transaction identifier (B-TID) provided by the terminal; or a network application function identifier (NAF-ID) of the CAPIF function, including a fully qualified domain name (FQDN) of the CAPIF function and/or a Ua interface security protocol identifier between the CAPIF function and the terminal. Second response information sent by the BSF is received, where the second response information includes at least one of: a key Ks _NAF corresponding to the CAPIF function; user security settings (USS) information; a bootstrapping time; or a lifetime of a key. The terminal is authenticated based on the key Ks _NAF.

In an embodiment, the authentication request information sent by the terminal is received, where the authentication request information is for triggering the CAPIF function to authenticate the identity of the API invoker. Second request information is sent to a bootstrapping server function (BSF), where the second request information includes at least one of: a bootstrapping transaction identifier (B-TID) provided by the terminal; or a network application function identifier (NAF-ID) of the CAPIF function, including a fully qualified domain name (FQDN) of the CAPIF function and/or a Ua interface security protocol identifier between the CAPIF function and the terminal. Second response information sent by the BSF is received, where the second response information includes at least one of: a key Ks _NAF corresponding to the CAPIF function; user security settings (USS) information; a bootstrapping time; or a lifetime of a key. In response to performing identity authentication of the terminal based on the GBA, identity information of the API invoker is verified based on Ks _NAF. In response to successful identity verification of the API invoker, an API invoker profile is generated, where the API invoker profile includes a selected mode for API exposing function (AEF) authentication and authorization information between the API invoker and the AEF.

In an embodiment, in response to successful identity verification of the API invoker, an API invoker profile is generated, where the API invoker profile includes a selected mode for API exposing function (AEF) authentication and authorization information between the API invoker and the AEF. An API invoker certificate is generated for assigned API invoker identifier and public key, where the API invoker certificate includes an API invoker identifier, an API invoker public key and/or an API invoker identity identifier assigned by the CAPIF function.

In an embodiment, in response to successful identity verification of the API invoker, an API invoker profile is generated, where the API invoker profile includes a selected mode for API exposing function (AEF) authentication and authorization information between the API invoker and the AEF. A signing key is generated,
where the signing key is bound to an AIP invoker identifier (ID) generated by the CAPIF function.

It should be noted that those skilled in the art can understand that the methods provided by the embodiments of the present disclosure can be executed alone or together with some methods in the embodiments of the present disclosure or some methods in related technologies.

As shown in FIG. 18, an API invoker authentication method is provided in this embodiment, where the method is performed by a BSF and including the following step 181.
Step 181: receiving second request information sent by a CAPIF function;
where the second request information includes at least one of:
   a bootstrapping transaction identifier (B-TID) provided by an API invoker; or
   receiving a network application function identifier (NAF-ID) of the CAPIF function, including a fully qualified domain name (FQDN) of the CAPIF function and/or a Ua interface security protocol identifier between the CAPIF function and the terminal.

In an embodiment, the API invoker includes a terminal.

The terminals covered by the present disclosure may be, but are not limited to, a cell phone, a wearable device, an in-vehicle terminal, a road side unit (RSU), a smart home terminal, an industrial sensing device, and/or a medical device, etc. In some embodiments, the terminal may be a Redcap terminal or a new radio (NR) terminal of a predetermined version (e.g., an NR terminal of R17).

However, it should be noted that this embodiment is not limited to being performed by the terminal, but can also be performed by a base station or other network communication nodes in a core network in certain scenarios, and is not limited here. For example, in scenarios where the base station is the receiver and/or sender in multimodal services, this embodiment can also be performed by the base station; in scenarios where the core network device is the receiver and/or sender in multimodal services, this embodiment can also be performed by the core network device. It should be noted that illustrating the terminal as the executing subject in the present disclosure does not limit the technical solution of the present disclosure.

In an embodiment, the CAPIF function accessed by the API invoker includes at least one of:
a first type of function, including: a CAPIF core function; or
a second type of function, including: functions in a CAPIF system other than the CAPIF core function.

For example, the second type of function may be an API exposing function (AEF) and/or an authorization function (AF), but is not limited to these functions. It should be noted that the functions in the present disclosure may be network functions in the core network.

In an embodiment, the second request information sent by the CAPIF function is received; where the second request information includes at least one of: a bootstrapping transaction identifier (B-TID) provided by an API invoker; or receiving a network application function identifier (NAF-ID)of the CAPIF function, including a fully qualified domain name (FQDN) of the CAPIF function and/or a Ua interface security protocol identifier between the CAPIF function and the terminal. determining a key Ks _NAF based on a key Ks and a key derivation parameter. Second response information is sent to the BSF, where the second response information includes at least one of: a key Ks _NAF; user security settings (USS) information; a bootstrapping time; or a lifetime of a key.

It should be noted that those skilled in the art can understand that the methods provided by the embodiments of the present disclosure can be executed alone or together with some methods in the embodiments of the present disclosure or some methods in related technologies.

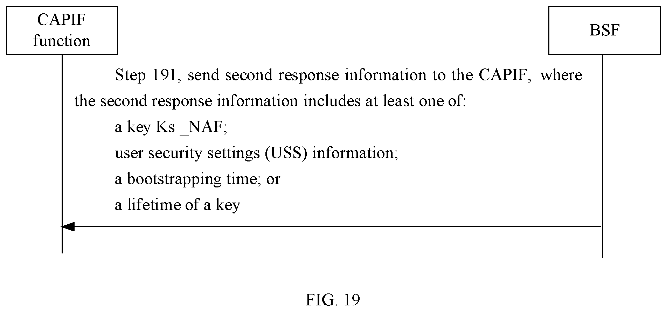

As shown in FIG. 19, an API invoker authentication method is provided in this embodiment, where the method is performed by a BSF and including the following step 191.
Step 191, sending second response information to the CAPIF,
where the second response information includes at least one of:
   a key Ks _NAF;
   user security settings (USS) information;
   a bootstrapping time; or
   a lifetime of a key.

In an embodiment, the second request information sent by the CAPIF function is received; where the second request information includes at least one of: a bootstrapping transaction identifier (B-TID) provided by an API invoker; or receiving a network application function identifier (NAF-ID) of the CAPIF function, including a fully qualified domain name (FQDN) of the CAPIF function and/or a Ua interface security protocol identifier between the CAPIF function and the terminal. A key Ks _NAF is determined based on a key Ks and a key derivation parameter. Second response information is sent to the BSF, where the second response information includes at least one of: a key Ks _NAF; user security settings (USS) information; a bootstrapping time; or a lifetime of a key.

It should be noted that those skilled in the art can understand that the methods provided by the embodiments of the present disclosure can be executed alone or together with some methods in the embodiments of the present disclosure or some methods in related technologies.

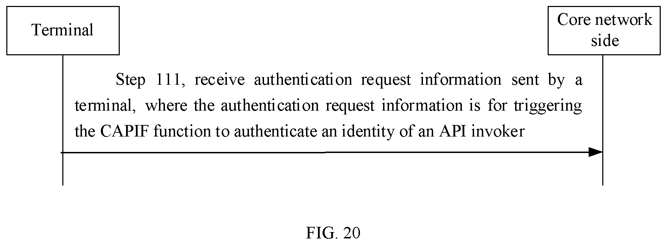

As shown in FIG. 20, an API invoker authentication method is provided in this embodiment, where the method is performed by a network side and including the following step 111:
Step 201, receiving authentication request information sent by a terminal,
where the authentication request information is for triggering the CAPIF function to authenticate an identity of an API invoker.

In an embodiment, the API invoker includes a terminal.

The terminals covered by the present disclosure may be, but are not limited to, a cell phone, a wearable device, an in-vehicle terminal, a road side unit (RSU), a smart home terminal, an industrial sensing device, and/or a medical device, etc. In some embodiments, the terminal may be a Redcap terminal or a new radio (NR) terminal of a predetermined version (e.g., an NR terminal of R17).

In an embodiment, in response to authenticating the identity of the API invoker based on a certificate authentication mode, the authentication request information indicates a certificate used for certificate authentication;
or,
in response to authenticating the identity of the API invoker based on a generic bootstrapping architecture (GBA) authentication mode, the authentication request information indicates a bootstrapping transaction identifier (B-TID).

In an embodiment, the method further includes:
sending response information to the terminal,
where the response information includes at least one of:
   an API invoker certificate, where the API invoker certificate includes an API invoker identifier, an API invoker public key and/or an API invoker identity identifier assigned by the CAPIF function;
   an API invoker identifier (ID) assigned by the CAPIF function;
   API exposing function (AEF) authentication and authorization information; or
   an API invoker signing key.

In an embodiment, the API invoker identity identifier includes at least one of:
a subscription permanent identifier (SUPI);
a generic public subscription identifier (GPSI);
an internet protocol (IP) multimedia subsystem (IMS) private identity (IMPI);
a subscription concealed identifier (SUCI); or
an application layer ID of UE.

In order to better understand the embodiments of the present disclosure, the technical solution of the present disclosure will be further explained through an exemplary embodiment.

### Example 1:

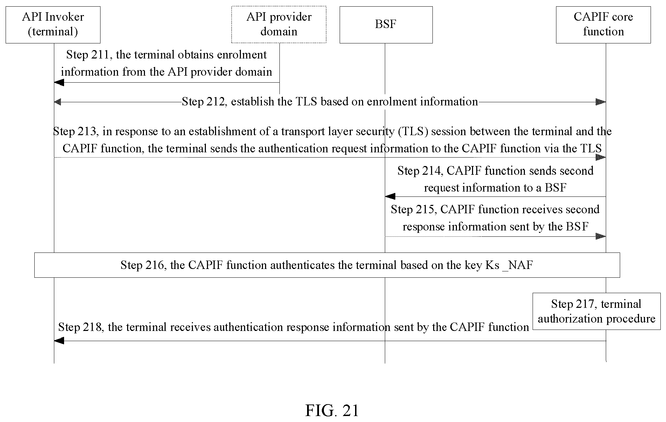

As shown in FIG. 21, an API invoker authentication method is provided in this embodiment, which includes the following steps 211 to 218.

Step 211, a terminal obtains enrollment information from an API provider domain.

Step 212, establishing the TLS based on enrollment information.

Step 213, in response to an establishment of a transport layer security (TLS) session between the terminal and a CAPIF function, the terminal sends the authentication request information to the CAPIF function via the TLS. It should be noted that step 203 can be performed under the condition that TLS is not established, i.e., no TLS is established and the authentication request information is sent directly.

Step 214, the CAPIF function sends second request information to a BSF.

Step 215, the CAPIF function receives second response information sent by the BSF.

Step 216, the CAPIF function authenticates the terminal based on the key Ks _NAF.

Step 217, terminal authorization procedure.

Step 218, the terminal receives authentication response information sent by the CAPIF function.

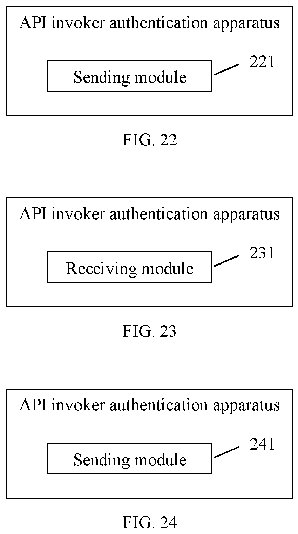

As shown in FIG. 22, an API invoker authentication apparatus is provided in this embodiment, which includes:
a sending module 221, configured to send authentication request information to a common API framework (CAPIF) 221 function,
where the authentication request information is for triggering the CAPIF function to authenticate an identity of an API invoker.

It should be noted that those skilled in the art can understand that the methods provided by the embodiments of the present disclosure can be executed alone or together with some methods in the embodiments of the present disclosure or some methods in related technologies.

As shown in FIG. 23, an API invoker authentication apparatus is provided in this embodiment, which includes:
a receiving module 231, configured to receive authentication request information sent by a terminal,
where the authentication request information is for triggering the CAPIF function to authenticate an identity of an API invoker.

It should be noted that those skilled in the art can understand that the methods provided by the embodiments of the present disclosure can be executed alone or together with some methods in the embodiments of the present disclosure or some methods in related technologies.

As shown in FIG. 24, an API invoker authentication apparatus is provided in this embodiment, which includes:
a receiving module 241, configured to receive second request information sent by a common API framework (CAPIF) function,
where the second request information includes at least one of:
   a bootstrapping transaction identifier (B-TID) provided by an API invoker; or
   receiving a network application function identifier (NAF-ID) of the CAPIF function, including a fully qualified domain name (FQDN) of the CAPIF function and/or a Ua interface security protocol identifier between the CAPIF function and the terminal.

It should be noted that those skilled in the art can understand that the methods provided by the embodiments of the present disclosure can be executed alone or together with some methods in the embodiments of the present disclosure or some methods in related technologies.

An embodiment of the present disclosure provides a communication device, including:
a processor; and
a memory, configured to store processor-executable instructions;
where the processor is configured to implement the method applied to any embodiment of the present disclosure when executing the executable instructions.

The processor may include various types of storage media that are non-transitory computer storage media capable of continuing to memorize the information stored thereon after the communication device is powered down.

The processor may be connected memory via a bus, etc., for reading an executable program stored on the memory.

An embodiment of the present disclosure further provides a computer storage medium, where the computer storage medium stores a computer executable program, and the executable program, when executed by a processor, realizes the method of any embodiment of the present disclosure.

Regarding to the apparatus in the above embodiment, a specific way in which each module performs operations has been described in detail in the embodiments relating to the method, and will not be described in detail here.

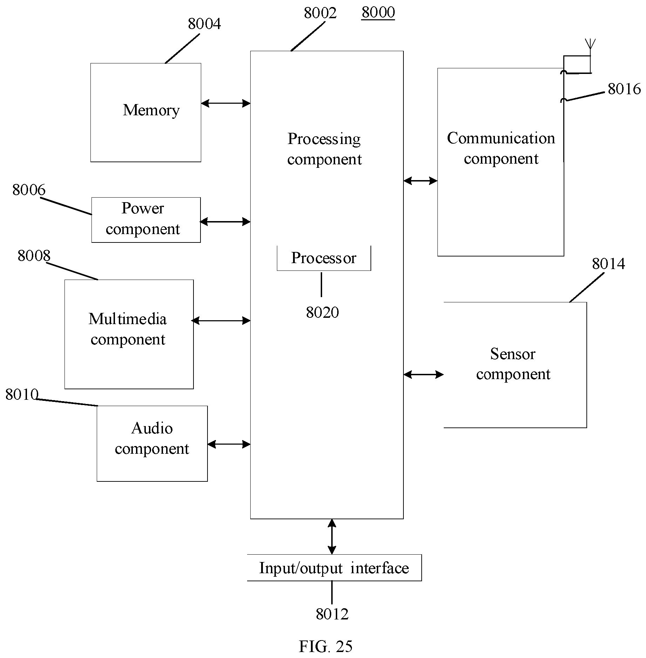

FIG. 25 is a block diagram of a user equipment 8000 according to an exemplary embodiment. For example, the user equipment 8000 may be a mobile phone, a computer, a digital broadcasting terminal, a messaging device, a game console, a tablet device, a medical device, a fitness device, a personal digital assistant, etc.

Referring to FIG. 25, the user equipment 8000 may include one or more of the following components: a processing component 8002, a memory 8004, a power component 8006, a multimedia component 8008, an audio component 8010, an input/output (I/O) interface 8012, a sensor component 8014, and a communication component 8016.

The processing component 8002 generally controls an overall operation of the user equipment 8000, such as operations associated with display, telephone call, data communication, camera operation and recording operation. The processing component 8002 may include one or more processors 8020 to execute instructions to complete all or part of steps of the above-mentioned personal Internet of Things device credential configuration method. In addition, the processing component 8002 may include one or more modules to facilitate interactions between the processing component 8002 and other components. For example, the processing component 8002 may include a multimedia module to facilitate interactions between the multimedia component 8008 and the processing component 8002.

The memory 8004 is configured to store various types of data to support operations in the device 8000. Examples of these data include instructions of any application program or method for being operated on the user equipment 8000, contact data, phone book data, messages, pictures, videos, etc. The memory 8004 can be implemented by any type of volatile or non-volatile memory device or combinations thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk or optical disk.

The power component 8006 provides power to various components of the user equipment 8000. The power component 8006 may include a power management system, one or more power supplies, and other components associated with generating, managing and distributing power for the user equipment 8000.

The multimedia component 8008 includes a screen that provides an output interface between the user equipment 8000 and a user. In some embodiments, the screen may include a liquid crystal display (LCD) and a touch panel (TP). If the screen includes a touch panel, the screen may be implemented as a touch screen to receive an input signal from a user. The touch panel includes one or more touch sensors to sense touching, sliding and gestures on the touch panel. The touch sensor may not only sense a boundary of a touching or sliding action, but also detect a duration and a pressure related to the touching or sliding operation. In some embodiments, the multimedia component 8008 includes a front camera and/or a rear camera. When the device 8000 is in an operation mode, such as a shooting mode or a video mode, the front camera and/or the rear camera can receive external multimedia data. Each front camera and rear camera may be a fixed optical lens system or have focal length and optical zoom capability.

The audio component 8010 is configured to output and/or input audio signals. For example, the audio component 8010 includes a microphone (MIC) configured to receive external audio signals when the user equipment 8000 is in the operation mode, such as a calling mode, a recording mode and a voice recognition mode. The received audio signal may be further stored in the memory 8004 or transmitted via the communication component 8016. In some embodiments, the audio component 8010 further includes a speaker for outputting audio signals.

The I/O interface 8012 provides an interface between the processing component 8002 and peripheral interface modules, where the peripheral interface modules may be keyboards, click-wheels, buttons, etc. These buttons may include, but are not limited to: home button, volume button, start button and lock button.

The sensor component 8014 includes one or more sensors for providing various aspects of state evaluation for the user equipment 8000. For example, the sensor component 8014 can detect an on/off state of the user equipment 8000, a relative positioning of components, for example, the components are the display and the keypad of the user equipment 8000, and the sensor component 8014 can also detect a position change of the user equipment 8000 or a component of the user equipment 8000, presence or absence of user contact with the user equipment 8000 orientation or acceleration/deceleration of the user equipment 8000 and a temperature change of the user equipment 8000. The sensor component 8014 may include a proximity sensor configured to detect presence of a nearby object without any physical contact. The sensor component 8014 may also include an optical sensor, such as a CMOS or CCD image sensor, for use in imaging applications. In some embodiments, the sensor component 8014 may further include an acceleration sensor, a gyroscope sensor, a magnetic sensor, a pressure sensor or a temperature sensor.

The communication component 8016 is configured to facilitate wired or wireless communication between the user equipment 8000 and other devices. The user equipment 8000 can access a wireless network based on communication standards, such as Wi-Fi, 2G or 3G, or a combination thereof. In an exemplary embodiment, the communication component 8016 receives a broadcast signal or broadcast related information from an external broadcast management system via a broadcast channel. In an exemplary embodiment, the communication component 8016 further includes a near field communication (NFC) module to facilitate short-range communication. For example, the NFC module can be implemented based on radio frequency identification (RFID) technology, infrared data association (IrDA) technology, ultra-wideband (UWB) technology, Bluetooth (BT) technology and other technologies.

In an exemplary embodiment, the user equipment 8000 may be implemented by one or more application-specific integrated circuits (ASIC), digital signal processors (DSP), digital signal processing devices (DSPD), programmable logic devices (PLD), field programmable gate arrays (FPGA), controllers, micro-controllers, micro-processors or other electronic components, for executing the steps of the above-mentioned personal Internet of Things device credential configuration method.

In an exemplary embodiment, a non-transitory computer-readable storage medium is further provided, such as the memory 8004 including instructions, where the instructions can be executed by a processor 8020 of the user equipment 8000 to complete the steps of the above-mentioned personal Internet of Things device credential configuration method. For example, the non-transitory computer-readable storage medium may be an ROM, a random access memory (RAM), a CD-ROM, a magnetic tape, a floppy disk, an optical data storage device, etc.

Other implementations of the embodiments of the present disclosure will easily occur to those skilled in the art after considering the specification and practicing the present disclosure disclosed herein. The present disclosure is intended to cover any variations, uses or adaptations of the embodiments of the present disclosure, and these variations, uses or adaptations follow general principles of the embodiments of the present disclosure and include common sense or common technical means in the technical field that are not disclosed in the embodiments of the present disclosure. The specification and embodiments are to be regarded as exemplary only, and true scope and spirit of the embodiments of the present disclosure are indicated by the following claims.

It should be understood that the embodiments of the present disclosure are not limited to precise structures described above and shown in the accompanying drawings, and various modifications and changes can be made without departing from its scope. The scope of the embodiments of the present disclosure is limited only by the appended claims.

## Claims

1. An application program interface, API, invoker authentication method, comprising:
sending authentication request information to a common API framework, CAPIF, function, wherein the authentication request information is for triggering the CAPIF function to authenticate an identity of an API invoker.

2. The method according to claim 1, wherein the API invoker comprises a terminal.

3. The method according to claim 2, wherein,
in response to authenticating the identity of the API invoker based on a certificate authentication mode, the authentication request information indicates a certificate used for certificate authentication; or,
in response to authenticating the identity of the API invoker based on a generic bootstrapping architecture, GBA, authentication mode, the authentication request information indicates a bootstrapping transaction identifier, B-TID.

4. The method according to claim 2, wherein the CAPIF function accessed by the API invoker comprises at least one of:
a first type of function, comprising: a CAPIF core function; or
a second type of function, comprising: functions in a CAPIF system other than the CAPIF core function.

5. The method according to claim 4, wherein the second type of function comprises at least one of an API exposing function, AEF, or an authorization function, AF.

6. The method according to claim 2, further comprising:
determining, according to the CAPIF function accessed by the API invoker, an authentication mode for authenticating the API invoker.

7. The method according to claim 6, wherein the determining, according to the CAPIF function accessed by the API invoker, an authentication mode for authenticating the API invoker comprises:
in response to the CAPIF function accessed by the terminal comprising the first type of function, determining whether the authentication mode for authenticating the API invoker is a generic bootstrapping architecture, GBA, authentication mode or a certificate authentication mode; or,
in response to the CAPIF function accessed by the terminal not comprising the first type of function, determining that the authentication mode for authenticating the API invoker is a certificate authentication mode.

8. The method according to claim 7, further comprising:
in response to the CAPIF function accessed by the terminal being the first type of function, receiving a certificate for certificate authentication sent by the first type of function, wherein the certificate is used for authentication between the terminal and the second type of function.

9. The method according to claim 8, further comprising:
in response to the CAPIF function accessed by the terminal being the second type of function, performing terminal identity authentication based on a GBA or performing certificate-based terminal identity authentication based on a certificate sent by the first type of function.

10. The method according to claim 9, wherein the sending authentication request information to a CAPIF function comprises:
in response to performing the certificate-based terminal identity authentication based on the certificate sent by the first type of function, sending the authentication request information to the CAPIF function, wherein the authentication request information comprises the certificate sent by the first type of function.

11. The method according to claim 2, further comprising:
performing identity authentication between the API invoker and the CAPIF function based on a generic bootstrapping architecture, GBA, authentication mode.

12. The method according to claim 11, wherein the authentication request information comprises at least one of:
an enrollment credential provided by an API provider domain, wherein the enrollment credential comprises an access token;
an API invoker public key; or
a bootstrapping transaction identifier, B-TID.

13. The method according to claim 11, further comprising:
receiving authentication response information sent by the CAPIF function, wherein the authentication response information comprises at least one of:
an API invoker certificate, wherein the API invoker certificate comprises at least one of an API invoker identifier, an API invoker public key or an API invoker identity identifier assigned by the CAPIF function;
an API invoker identifier, ID, assigned by the CAPIF function;
API exposing function, AEF, authentication and authorization information; or
an API invoker signing key.

14. The method according to claim 13, wherein the API invoker identity identifier comprises at least one of:
a subscription permanent identifier, SUPI;
a generic public subscription identifier, GPSI;
an internet protocol, IP, multimedia subsystem, IMS, private identity, IMPI;
a subscription concealed identifier, SUCI; or
an application layer ID of UE.

15. The method according to claim 12, wherein the sending authentication request information to a CAPIF function comprises:
in response to an establishment of a transport layer security, TLS, session between the terminal and the CAPIF function, sending the authentication request information to the CAPIF function via the TLS.

16. The method according to claim 15, further comprising:
establishing the TLS based on enrollment information, wherein the enrollment information comprises at least one of:
an address of the CAPIF function;
a fully qualified domain name, FQDN, of the CAPIF function;
a root certificate authority, CA, certificate of the CAPIF function; or
the enrollment credential provided by the API provider domain, wherein the enrollment credential comprises the access token.

17. The method according to claim 12, further comprising:
obtaining enrollment information from the API provider domain or preconfigured information of the API invoker.

18. The method according to claim 12, further comprising:
initiating communication between the terminal and a network function based on a reference point Ua interface.

19. The method according to claim 18, wherein the initiating communication between the terminal and a network function based on a reference point Ua interface comprises:
initiating communication between the terminal and the network function based on the reference point Ua interface protected by a key Ks _NAF, wherein the key Ks _NAF is a shared key between the terminal and the network function.

20. The method according to claim 19, further comprising:
in response to a key Ks of a universal integrated circuit card, UICC, application selected by the terminal being available, determining the key Ks _NAF based on the key Ks; or
in response to a key Ks of the UICC application selected by the terminal being unavailable, determining the key Ks based on a Ub reference point and a bootstrapping server function, BSF, and determining the key Ks _NAF based on the key Ks; or,
in response to the terminal not desiring to determine the key Ks _NAF based on an existing key Ks of the UICC application, determining a newly generated key Ks based on a Ub reference point and a BSF, and determining the key Ks _NAF based on the newly generated key Ks.

21. The method according to claim 19, further comprising:
receiving first request information sent by the CAPIF function, wherein the first request information indicates that the key Ks _NAF has expired or is about to expire.

22. An application program interface, API, invoker authentication method, performed by a common API framework, CAPIF, function and comprising:
receiving authentication request information sent by a terminal,
wherein the authentication request information is for triggering the CAPIF function to authenticate an identity of an API invoker.

23. The method according to claim 22, wherein the API invoker comprises a terminal.

24. The method according to claim 23, wherein,
in response to authenticating the identity of the API invoker based on a certificate authentication mode, the authentication request information indicates a certificate used for certificate authentication; or,
in response to authenticating the identity of the API invoker based on a generic bootstrapping architecture, GBA, authentication mode, the authentication request information indicates a bootstrapping transaction identifier, B-TID.

25. The method according to claim 23, wherein the CAPIF function accessed by the API invoker comprises at least one of:
a first type of function, comprising: a CAPIF core function; or
a second type of function, comprising: functions in a CAPIF system other than the CAPIF core function.

26. The method according to claim 25, wherein the second type of function comprises at least one of an API exposing function, AEF, or an authorization function, AF.

27. The method according to claim 23, further comprising:
in response to the authentication request information comprising a certificate issued by a first type of function, verifying, by a second type of function, the certificate using a public key of the first type of function; and
in response to the verification of the certificate passing, passing, by the terminal, the identity authentication.

28. The method according to claim 23, wherein in response to authenticating the identity of the API invoker based on a generic bootstrapping architecture, GBA, authentication mode, the first request information comprises at least one of:
an enrollment credential provided by an API provider domain, wherein the enrollment credential comprises an access token;
an API invoker public key; or
a bootstrapping transaction identifier, B-TID.

29. The method according to claim 28, further comprising:
sending response information to the terminal, wherein the response information comprises at least one of:
an API invoker certificate, wherein the API invoker certificate comprises at least one of an API invoker identifier, an API invoker public key or an API invoker identity identifier assigned by the CAPIF function;
an API invoker identifier, ID, assigned by the CAPIF function;
API exposing function, AEF, authentication and authorization information; or
an API invoker signing key.

30. The method according to claim 29, wherein the API invoker identity identifier comprises at least one of:
a subscription permanent identifier, SUPI;
a generic public subscription identifier, GPSI;
an internet protocol, IP, multimedia subsystem, IMS, private identity, IMPI;
a subscription concealed identifier, SUCI; or
an application layer ID of UE.

31. The method according to claim 28, wherein the receiving authentication request information sent by a terminal comprises:
in response to an establishment of a transport layer security, TLS, session between the terminal and a network function, receiving the authentication request information sent by the terminal based on the TLS.

32. The method according to claim 31, further comprising:
establishing the TLS based on enrollment information, wherein the enrollment information comprises at least one of:
an address of the CAPIF function;
a fully qualified domain name, FQDN, of the CAPIF function;
a root certificate authority, CA, certificate of the CAPIF function; or
the enrollment credential provided by the API provider domain, wherein the enrollment credential comprises the access token.

33. The method according to claim 28, further comprising:
performing communication between the terminal and a network function based on a reference point Ua interface.

34. The method according to claim 33, wherein the initiating communication between the terminal and a network function based on a reference point Ua interface comprises:
performing communication between the terminal and the network function based on the reference point Ua interface protected by a key Ks _NAF,
wherein the key Ks _NAF is a shared key between the terminal and the network function.

35. The method according to claim 34, further comprising:
in response to the key Ks _NAF has expired or is about to expire, sending first request information to the terminal, wherein the first request information indicates that the key Ks _NAF has expired or is about to expire.

36. The method according to claim 28, further comprising:
sending second request information to a bootstrapping server function, BSF, wherein the second request information comprises at least one of:
a bootstrapping transaction identifier, B-TID, provided by the terminal; or
a network application function identifier, NAF-ID, of the CAPIF function, comprising at least one of a fully qualified domain name, FQDN, of the CAPIF function or a Ua interface security protocol identifier between the CAPIF function and the terminal.

37. The method according to claim 36, further comprising:
receiving second response information sent by the BSF, wherein the second response information comprises at least one of:
a key Ks _NAF corresponding to the CAPIF function;
user security settings, USS, information;
a bootstrapping time; or
a lifetime of a key.

38. The method according to claim 37, further comprising:
authenticating the terminal based on the key Ks _NAF.

39. The method according to claim 38, wherein the authenticating the terminal based on the key Ks _NAF comprises:
in response to performing identity authentication of the terminal based on the GBA, verifying identity information of the API invoker based on Ks _NAF.

40. The method according to claim 39, further comprising:
in response to successful identity verification of the API invoker, generating an API invoker profile, wherein the API invoker profile comprises a selected mode for API exposing function, AEF, authentication and authorization information between the API invoker and the AEF.

41. The method according to claim 40, further comprising:
generating an API invoker certificate for assigned API invoker identifier and public key, wherein the API invoker certificate comprises at least one of an API invoker identifier, an API invoker public key or an API invoker identity identifier assigned by the CAPIF function.

42. The method according to claim 41, wherein the API invoker identity identifier comprises at least one of:
a subscription permanent identifier, SUPI;
a generic public subscription identifier, GPSI;
an internet protocol, IP, multimedia subsystem, IMS, private identity, IMPI;
a subscription concealed identifier, SUCI; or
an application layer identifier, ID, of UE.

43. The method according to claim 40, further comprising:
generating a signing key, wherein the signing key is bound to an AIP invoker identifier, ID, generated by the CAPIF function.

44. An application program interface, API, invoker authentication method, performed by a bootstrapping server function, BSF, and comprising:
receiving second request information sent by a CAPIF function; wherein the second request information comprises at least one of:
a bootstrapping transaction identifier, B-TID, provided by an API invoker; or
receiving a network application function identifier, NAF-ID, of the CAPIF function, comprising at least one of a fully qualified domain name, FQDN, of the CAPIF function or a Ua interface security protocol identifier between the CAPIF function and the terminal.

45. The method according to claim 44, wherein the API invoker comprises a terminal.

46. The method according to claim 44, wherein the CAPIF function comprises at least one of:
a first type of function, comprising: a CAPIF core function; or
a second type of function, comprising: functions in a CAPIF system other than the CAPIF core function.

47. The method according to claim 46, wherein the second type of function comprises at least one of an API exposing function, AEF, or an authorization function, AF.

48. The method according to claim 44, further comprising:
determining a key Ks _NAF based on a key Ks and a key derivation parameter.

49. The method according to claim 48, further comprising:
sending second response information to the BSF, wherein the second response information comprises at least one of:
a key Ks _NAF;
user security settings, USS, information;
a bootstrapping time; or
a lifetime of a key.

50. An application program interface, API, invoker authentication method, performed by a network side and comprising:
receiving authentication request information sent by a terminal, wherein the authentication request information is for triggering a common API framework, CAPIF, function to authenticate an identity of an API invoker.

51. The method according to claim 50, wherein the API invoker comprises a terminal.

52. The method according to claim 51, wherein,
in response to authenticating the identity of the API invoker based on a certificate authentication mode, the authentication request information indicates a certificate used for certificate authentication; or,
in response to authenticating the identity of the API invoker based on a generic bootstrapping architecture, GBA, authentication mode, the authentication request information indicates a bootstrapping transaction identifier, B-TID.

53. The method according to claim 50, further comprising:
sending response information to the terminal, wherein the response information comprises at least one of:
an API invoker certificate, wherein the API invoker certificate comprises at least one of an API invoker identifier, an API invoker public key or an API invoker identity identifier assigned by the CAPIF function;
an API invoker identifier, ID, assigned by the CAPIF function;
API exposing function, AEF, authentication and authorization information; or
an API invoker signing key.

54. The method according to claim 53, wherein the API invoker identity identifier comprises at least one of:
a subscription permanent identifier, SUPI;
a generic public subscription identifier, GPSI;
an internet protocol, IP, multimedia subsystem, IMS, private identity, IMPI;
a subscription concealed identifier, SUCI; or
an application layer ID of UE.

55. An application program interface, API, invoker authentication apparatus, comprising:
a sending module, configured to send authentication request information to a common API framework, CAPIF, function, wherein the authentication request information is for triggering the CAPIF function to authenticate an identity of an API invoker.

56. An application program interface, API, invoker authentication apparatus, comprising:
a receiving module, configured to receive authentication request information sent by a terminal, wherein the authentication request information is for triggering the CAPIF function to authenticate an identity of an API invoker.

57. An application program interface, API, invoker authentication apparatus, comprising:
a receiving module, configured to receive second request information sent by a common API framework, CAPIF, function, wherein the second request information comprises at least one of:
a bootstrapping transaction identifier, B-TID, provided by an API invoker; or
receiving a network application function identifier, NAF-ID, of the CAPIF function, comprising at least one of a fully qualified domain name, FQDN, of the CAPIF function or a Ua interface security protocol identifier between the CAPIF function and the terminal.

58. An application program interface, API, invoker authentication apparatus, comprising:
a receiving module, configured to receive authentication request information sent by a terminal, wherein the authentication request information is for triggering a common API framework, CAPIF, function to authenticate an identity of an API invoker.

59. A communication device, comprising:
a memory; and
a processor, connected to the memory, configured to execute computer-executable instructions stored on the memory and capable of implementing the method of any one of claims 1 to 21, 22 to 43, 44 to 49 or 50 to 54.

60. A computer storage medium, the computer storage medium storing computer-executable instructions, the computer-executable instructions, when executed by a processor, being capable of realizing the method according to any one of claims 1 to 21, 22 to 43, 44 to 49 or 50 to 54.
